# EUROPÄISCHE PATENTSCHRIFT

(11) **EP 4 598 721 B1**
(45) Veröffentlichungstag und Bekanntmachung des Hinweises auf die Patenterteilung: **04.03.2026**
(21) Anmeldenummer: 23753890.5
(22) Anmeldetag: 05.08.2023
(51) Int. Cl.: B29B 7/74, B29B 7/76, B29B 7/60, B29B 7/72, B29B 7/40, G05D 7/06, G05D 11/13, B29K 75/00

(54) **VERFAHREN ZUM HERSTELLEN VON BAUTEILEN AUS POLYURETHAN IM SCHUSSVERFAHREN**
PROCESS FOR PRODUCING COMPONENTS FROM POLYURETHANE IN A SHOT-METHOD
PROCÉDÉ DE PRODUCTION DE COMPOSANTS À PARTIR DE POLYURÉTHANE DANS UNE MÉTHODE DE TIR

(30) Priorität: 04.10.2022 DE 102022125452
(43) Veröffentlichungstag der Anmeldung: 13.08.2025
(73) Patentinhaber: Hennecke GmbH, 53757 Sankt Augustin (DE)
(72) Erfinder: SANTOS BARROS, Tobias, 53881 Euskirchen (DE); ETSCHENBERG, Lars, 53721 Siegburg (DE)
(74) Vertreter: Gosdin, Carstensen & Partner Patentanwälte Partnerschaftgesellschaft mbB
(86) Internationale Anmeldenummer: PCT/EP2023/071751
(87) Internationale Veröffentlichungsnummer: WO 2024/074235

(56) Entgegenhaltungen:
- EP-A1- 0 976 514
- EP-A1- 1 447 206
- US-A- 4 944 599
- US-A1- 2021 308 906
- US-B2- 8 709 313
- WIKIPEDIA: "Ovalrad-Durchflussmesser", 14 August 2020 (2020-08-14), pages 1 - 3, XP002810112, Retrieved from the Internet <URL:https://de.wikipedia.org/wiki/Ovalrad-Durchflussmesser> [retrieved on 20230913]
- KUNSTSTOFFTECHNIK ING. E. GOLLUS & SOHN GMBH [DE]: "Zahnrad-Durchfluss-Messturbine für viskose Flüssigkeiten", 17 January 2021 (2021-01-17), pages 1 - 3, XP002810113, Retrieved from the Internet <URL:http://web.archive.org/web/20210117082210/https://www.engolit.de/pdfs/Zahnrad-Durchfluss-Messturbine_(Engolit).pdf> [retrieved on 20230913]

## Beschreibung

Die Erfindung betrifft ein Verfahren zum Herstellen von Bauteilen aus Polyurethan im Schussverfahren, bei dem mindestens zwei Reaktionskomponenten mittels Dosierpumpen, insbesondere bei Dosierdrücken von mindestens 50 bar, in einen Nuten-gesteuerten Mischkopf gefördert werden, wobei die Reaktionskomponenten zunächst im Kreislauf durch eine jeweilige Komponentendüse über eine Rezirkulationsnut in einem Steuerschieber im Kreislauf zurück in einen Vorratsbehälter gefördert werden, wobei der Schussbeginn durch ein von einer Maschinensteuerung ausgegebenes elektrisches Signal eingeleitet wird, wobei in Folge dessen ein hydraulisches Ventil geschaltet wird und daraufhin der Steuerschieber aus der Kreislauf-Position in die Schuss-Position verfährt, so dass die Reaktionskomponenten in die Mischkammer eingetragen, dort miteinander vermischt und anschließend ausgetragen werden, wobei anschließend das Schussende durch Wegnahme des von der Maschinensteuerung ausgegebenen elektrischen Signals eingeleitet wird, wobei in Folge dessen das hydraulische Ventil wieder geschaltet wird und daraufhin der Steuerschieber aus der Schuss-Position zurück in die Kreislauf-Position verfährt, so dass die Reaktionskomponenten wieder über die Rezirkulationsnut im Steuerschieber im Kreislauf zurück in den Behälter gefördert werden, wobei durch den Mischkopf beim Verfahren des Steuerschiebers aus der Kreislauf-Position in die Schuss-Position und umgekehrt kurzzeitig die Medienströme bei laufenden Dosierpumpen unterbrochen werden, wobei die geförderten Volumenströme zwischen Dosierpumpe und Mischkopf durch jeweils einen Volumenstromzähler gefördert werden, welcher zumindest aus einem Gehäuse mit einer Einlassöffnung und einer Auslassöffnung und zumindest zwei in diesem Gehäuse zusammenwirkenden, drehbar gelagerten Körpern, insbesondere Zahnrädern, besteht, wobei diese drehbar gelagerten Körper als Reaktion auf einen durch den Volumenstromzähler geförderten Volumenstrom in Rotation versetzt werden.

Zum Stand der Technik wird auf die EP 0 976 514 A1 hingewiesen, in der ein gattungsgemäßes Schussverfahren offenbart wird. In der DE 103 00 101 A1 wird ein Nuten-gesteuerter Mischkopf beschrieben. Auch in der DE 26 07 641 A1 wird ein Hochdruck-Mischkopf beschrieben der für ein gattungsgemäßes Verfahren eingesetzt werden kann. Ähnliche und weitere Lösungen zeigen die DE 34 27 326 A1 und die US 2022/0347888 A1**.**

Weiterhin zeigt die gattungsgemäße EP 1 447 206 A1 ein Verfahren, bei dem als Indiz für die Umschaltung vom Kreislaufbetrieb in den Schussbetrieb ein Näherungsschalter eingesetzt wird, der im Mischkopf eingebaut ist. Ein weiteres ähnliches Verfahren offenbart die US 2021/0308906 A1**.** Durchflussmesselemente werden beispielsweise im Wikipedia-Beitrag "Ovalrad-Durchflussmesser" (https://de.wikipedia.org/wiki/Ovalrad-Durchflussmesser) und im Prospekt "Zahnrad-Durchfluss-Messturbine für viskose Flüssigkeiten" der Kunststofftechnik Ing. E. Gollus & Sohn GmbH beschrieben.

Bei Dosieranlagen für die Verarbeitung von Polyurethan im Schussbetrieb werden mindestens zwei Reaktivkomponenten in einem Mischkopf über Düsen mit hoher Geschwindigkeit in eine Mischkammer dosiert, in der sie dann vermischt und anschließend beispielsweise in eine Form ausgetragen werden.

Für ein fehlerfreies Bauteil ist es entscheidend, dass die beiden Reaktivkomponenten während des gesamten Schusses im richtigen Mischungsverhältnis in die Mischkammer eingetragen werden. Eine Verschiebung des Mischungsverhältnisses bedeutet eine Beeinflussung der physikalischen Eigenschaften und beeinträchtigt somit nachteilig die Qualität des Bauteils.

Weiterhin ist das Schussgewicht eine wichtige Größe, die reproduzierbar eingehalten werden muss, um ein qualitativ hochwertiges Bauteil zu erhalten. Ein zu niedriges Schussgewicht kann beispielsweise zu Fehlstellen im Bauteil führen; aber auch ein zu hohes Schussgewicht kann die Bauteileigenschaften negativ beeinflussen.

Somit ist es für den Hersteller von Formteilen wichtig, dass das Mischungsverhältnis während des gesamten Schusses möglichst exakt eingehalten wird und dass das eingesetzte Messsystem eine Abweichung des Mischungsverhältnisses während eines Schusses sicher detektiert, um das betroffene Bauteil im gegebenen Falle auszusortieren oder es einer genaueren Prüfung zu unterziehen. Weiterhin ist es wichtig, dass die effektive Schussdauer richtig eingestellt ist und reproduzierbar eingehalten wird.

Um auch bei Schussbeginn und bei Schussende das richtige Mischungsverhältnis sicherstellen zu können, werden die Reaktivkomponenten vor und nach dem Schuss idealerweise bei gleichen Druckverhältnissen im Kreislauf über den Mischkopf gefahren. Im Kreislaufbetrieb werden dabei über die jeweiligen Pumpen im Zusammenspiel mit der jeweiligen Durchflussmessung die richtigen Mengenströme eingestellt, so dass nach dem Umschalten von Kreislauf- auf Schussbetrieb auch schon unmittelbar zu Schussbeginn das richtige Mischungsverhältnis eingestellt ist.

Da auf einer Polyurethan-Verarbeitungsanlage häufig von Schuss zu Schuss unterschiedliche Formen mit unterschiedlichen Mengenströmen beschickt werden, müssen gegebenenfalls immer wieder neue Mengenströme innerhalb einer kurzen Zeitspanne zwischen zwei Schüssen eingestellt werden. Je schneller die Schussfolge ist, umso wirtschaftlicher kann die Anlage betrieben werden.

Bislang wird in der Steuerung bei einem bestimmten Druck eine Kennlinie abgelegt, anhand derer die Pumpendrehzahl für den geforderten Mengenstrom ermittelt wird. Diese Drehzahl wird dann zwischen zwei Schüssen eingestellt und der nächste Schuss wird ausgelöst. Da der tatsächliche Mengenstrom aber von den eingestellten Drücken und auch von der tatsächlichen Temperatur (da diese die Medienviskosität und auch die Dichte beeinflusst) abhängt, ist diese Methode zwar schnell, aber entspricht häufig nicht den sehr hohen Anforderungen an Genauigkeit und Zuverlässigkeit, die insbesondere in der Automobilindustrie gefordert werden.

Aufgrund der schnellen Schussfolge ist die Durchflussmessung häufig nicht schnell genug bzw. bei zu kurzem Messintervall nicht exakt genug, um den Mengenstrom unabhängig von der hinterlegten Kennlinie exakt einstellen bzw. einregeln zu können. Wünschenswert wäre eine entsprechend schnelle und exakte Messmethode, um den Mengenstrom vor jedem Schuss bei dem tatsächlichen Dosierdruck möglichst exakt nachregeln bzw. einstellen zu können.

Aufgrund dieser Anforderungen werden bei der Durchführung des gattungsgemäßen Verfahrens in der Regel Zahnradzähler eingesetzt, da diese die Volumenströme relativ schnell und genau messen können (analog sind hierunter auch Schraubenspindelzähler zu verstehen, die nachfolgend von den Überlegungen mit erfasst sind). Ein weiterer Vorteil von Zahnradzählern ist der relativ günstige Preis. Aber insbesondere bei relativ kleinen Mengenströmen, bei denen die Zahnräder des Zahnradzählers sich nur relativ langsam drehen, kommen auch die Zahnradzähler bezüglich Messgenauigkeit im Zusammenspiel mit Messgeschwindigkeit an ihre Grenzen.

Insbesondere ist es dann häufig nicht mehr möglich, zwischen zwei Schüssen eine Regelung der Dosiermenge entsprechend schnell und genau durchzuführen, so dass man auf die hinterlegte Kennlinie angewiesen ist. Bestenfalls lässt sich diese Kennlinie anhand der tatsächlich gemessenen Durchflüsse dabei dynamisch anpassen. Aber eine Regelung ist bei sehr kurzen Zeitintervallen zwischen zwei Schüssen häufig nicht möglich, weil das Messinstrument nicht gleichzeitig schnell und exakt genug messen kann.

Auch eine Regelung des Volumenstroms während des Schusses ist auf diese Weise nicht praktikabel, weil die Messung in der Regel entweder zu langsam oder zu ungenau ist, um den Volumenstrom anhand des Messsignals sauber zu regeln.

Ein weiteres Problem besteht in einer exakten Auswertung und Protokollierung der Volumenströme während eines Schusses. Für den Hersteller ist es ein großer Vorteil, wenn die Volumenströme während des Schusses möglichst exakt gemessen und protokolliert werden. Diese Daten sind insbesondere für eine effiziente Qualitätskontrolle wichtig. Wenn Abweichungen vom Soll-Zustand sicher erfasst werden, können diese Daten benutzt werden, um die betroffenen Bauteile einer speziellen Prüfung zu unterziehen oder sie gegebenenfalls auszusortieren.

Ein weiteres technisches Problem besteht in der exakten Ermittlung des Schussbeginns und des Schussendes. Der tatsächliche Schussbeginn ist der Zeitpunkt, an dem der Steuerstößel den Weg in die Mischkammer freigibt. Das Signal der Schussfreigabe schaltet zunächst das Hydraulikventil, wodurch anschließend der Steuerstößel bewegt wird. Aber erst, wenn der Steuerstößel das Düsenloch tatsächlich passiert hat, strömt das Material in die Mischkammer. Für eine saubere Protokollierung und Optimierung der Schussdauer ist es also wichtig, diesen Zeitpunkt exakt zu ermitteln.

Im Lichte der vorstehend beschriebenen Situation liegt der vorliegenden Erfindung die **Aufgabe** zugrunde, ein gattungsgemäßes Verfahren so fortzubilden, dass es möglich ist, möglichst genaue Aussagen über die Menge der für einen Schuss eingesetzten Reaktivkomponenten zu machen, um Bauteile möglichst hoher Qualität zu fertigen. Dabei liegt ein wichtiger Aspekt darauf, den tatsächlichen Schussbeginn sowie das tatsächliche Schussende möglichst präzise zu erfassen. Ferner soll es möglich sein, unter Verwendung einfacher und kostengünstiger Volumenstromzähler, insbesondere Zahnradzähler, eine möglichst präzise Erfassung des tatsächlich geförderten Volumens während eines Schusses zu erlauben.

Die L ö s u n g dieser Aufgabe durch die Erfindung ist dadurch gekennzeichnet, dass bei einem gattungsgemäßen Verfahren die Schritte vorgesehen werden:
a) Ermitteln des tatsächlichen Schussbeginns dadurch, dass nach der Erzeugung des elektrischen Signals zum Schussbeginn der Verlauf des jeweiligen Drucks der Reaktionskomponente ausgewertet und der Zeitpunkt bestimmt wird, zu dem die Reaktionskomponente in die Mischkammer des Mischkopfs eintritt und Abspeichern des Zeitpunkts des tatsächlichen Schussbeginns,
b) Ermitteln des tatsächlichen Schussendes dadurch, dass nach der Erzeugung des elektrischen Signals zum Schussende der Verlauf des jeweiligen Drucks der Reaktionskomponente ausgewertet und der Zeitpunkt bestimmt wird, zu dem die Reaktionskomponente nicht mehr in die Mischkammer des Mischkopfs eintritt und Abspeichern des Zeitpunkts des tatsächlichen Schussendes,
c) Ermitteln des geförderten Volumens der Reaktionskomponenten mittels der Volumenstromzähler der jeweiligen Reaktionskomponenten, welches von den Dosierpumpen im Zeitraum zwischen dem Zeitpunkt des tatschlichen Schussbeginns und dem Zeitpunkt des tatschlichen Schussendes gefördert wurde und Ausgabe der jeweils ermittelten Volumina.

Bei der Durchführung der genannten Schritte a) und b) wird vorzugsweise der zeitliche Verlauf des Drucks der jeweiligen Reaktionskomponente analysiert, wobei der Maximalwert des Drucks und/oder ein vorgegebener Grenzwert für die Druckänderung über der Zeit betrachtet werden.

Konkret kann dabei vorgesehen werden, dass bei der Durchführung des oben genannten Schritts a) zwecks Feststellung des Schussbeginns das Maximum einer auftretenden Druckspitze ermittelt wird und der Zeitpunkt des Auftretens der Druckspitze als Zeitpunkt des tatsächlichen Schussbeginns festgelegt wird.

Indes kann weiter vorgesehen werden, dass bei der Durchführung des obigen Schritts b) zwecks Feststellung des Schussendes der Anstieg des Druckverlaufs ermittelt wird und der Zeitpunkt unmittelbar vor dem Ansteigen des Drucks als Zeitpunkt des tatsächlichen Schussendes festgelegt wird.

In der Maschinensteuerung sind vorzugsweise Daten für die Dichte der Reaktionskomponenten in Abhängigkeit vom Druck und von der Temperatur der Reaktionskomponente hinterlegt, wobei der Druck der Reaktionskomponenten zwischen dem Zeitpunkt des Schussbeginns und dem Zeitpunkt des Schussendes sowie die Temperatur der Reaktionskomponenten gemessen und hieraus die tatsächliche Dichte der Reaktionskomponenten bestimmt wird. Aus den bei obigem Schritt c) ermittelten Volumina der Reaktionskomponenten und den ermittelten tatsächlichen Dichten der Reaktionskomponenten wird dann vorzugsweise die geförderte Masse der Reaktionskomponenten bestimmt. Damit werden die effektiv während eines Schusses eingesetzten Massen der Reaktionskomponenten feststellbar.

Für die Ermittlung des geförderten Volumens gemäß obigem Schritt c) kann wie folgt vorgegangen werden:
A) Kalibrierung des Volumenstromzählers und Festlegen einer Fehlermaske durch:
   A1): Ermittlung des geförderten Volumens für jedes zusammenwirkende Zahnpaar der drehbar gelagerten Körper;
   A2): Bilden des Durchschnittswerts des geförderten Volumens über alle Zahnpaare;
   A3): Bestimmung der Abweichung des geförderten Volumens jedes Zahnpaars vom Durchschnittswert und Speichern der ermittelten Abweichungen;
B) Bei der Ermittlung des während des Zeitpunkts des tatschlichen Schussbeginns und dem Zeitpunkt des tatschlichen Schussendes geförderten Volumen gemäß obigem Schritt c):
   B1): Bestimmung des geförderten Volumens für alle während des Schussbeginns und Schussendes zum Einsatz gekommenen Teilvolumina der Zahnpaare unter Berücksichtigung der Abweichungen vom Durchschnittswert unter Nutzung der Fehlermaske;
   B2): Aufsummieren aller Teilvolumina zwecks Erhalts des zwischen dem Schussbeginn und dem Schussende insgesamt geförderten Volumens.

Für die Ermittlung gemäß obigem Schritt A1) kommen bevorzugt zwei Sensoren zum Einsatz, die die Lage der Zahnflanken oder Zahnköpfe der drehbar gelagerten Körper erfassen und jeweils in ein Rechtecksignal umwandeln, wobei das Rechtecksignal genutzt wird, um die Lage von aufeinander folgenden Zähnen der drehbar gelagerten Körper zu erfassen. Die beiden Sensoren sind dabei bevorzugt derart versetzt zueinander angeordnet, dass phasenversetzt die Lage der aufeinander folgenden Zahnflanken oder Zahnköpfe der drehbar gelagerten Körper erfasst werden können.

Die Kalibrierung und das Festlegen der Fehlermaske gemäß obigem Schritt A) kann dabei periodisch wiederholt werden.

Das vorgeschlagene Verfahren beinhaltet somit einerseits eine spezielle sehr schnelle und exakte Messmethode, bei der handelsübliche Zahnrad- oder gegebenenfalls auch Schraubenspindelzähler verwendet werden können. Zusätzlich beinhaltet das Verfahren eine sehr exakte Methode zur Detektion des tatsächlichen Schussanfangs und Schussendes. Die Kombination dieser beiden Merkmale ermöglicht einerseits eine sehr exakte Prozessführung während des Schusses und andererseits eine sehr exakte Protokollierung des Prozesses während eines Schusses. Dadurch kann einerseits die Ausschussrate reduziert werden und andererseits kann der Prozess der Qualitätskontrolle effizienter gestaltet werden. Mit Hilfe der besseren Protokollierung von Schussgewicht und Volumenströmen während des Schusses (inklusive einer möglichen Kennzahlverschiebung) können potentielle Ausschuss-Bauteile zuverlässiger anhand der Daten detektiert und gegebenenfalls aussortiert oder aber einer genaueren Untersuchung zugeführt werden.

In diesem Zusammenhang sei erwähnt, dass Störungen im Bauteil häufig durch Kennzahlverschiebungen oder Vermischungsstörungen zu Schussbeginn verursacht werden. Deshalb erhöhen eine sichere und exakte Detektion des Schussanfangs in Kombination mit einer exakten Volumenstrommessung die Produktionssicherheit und erleichtern insbesondere auch die Qualitätskontrolle für den Hersteller.

Wenn die Daten über einen längeren Zeitraum mit den tatsächlichen Ausschuss-Bauteilen korreliert werden, kann gegebenenfalls auch die Qualitätskontrolle automatisiert werden. Dabei ist auch eine automatisierte Anpassung der Maschinenparameter anhand dieser Daten möglich. Des Weiteren können diese Daten auch benutzt werden, um die Intervalle für die Maschinenwartung zu optimieren.

Die Detektion des Schussbeginns basiert darauf, dass der Steuerschieber die Düsenbohrung mit einer endlichen Geschwindigkeit passiert. In der Regel sind dabei für einen kurzen Zeitpunkt sowohl die Rücklaufleitung als auch der Weg in die Mischkammer versperrt. Dadurch steigt in den Medienleitungen der Druck kurz an; dieser Druckanstieg lässt sich nutzen, um den tatsächlichen Zeitpunkt des Schussbeginns zu detektieren.

Die Schwierigkeit bei der exakten Detektion des Schussbeginns besteht darin, dass der Druckverlauf in den Medienleitungen in der Regel um einen Mittelwert schwingt. Dies ist alleine schon dadurch bedingt, weil als Pumpen in der Regel Kolbenpumpen verwendet werden. Jeder Kolben wird pro Umdrehung einmal gefüllt und stößt das Material einmal pro Umdrehung wieder aus. Dadurch entsteht eine hochfrequente Schwingung des Mediendruckes im Leitungssystem.

Wenn der Druckanstieg bei Schussbeginn die Amplitude dieser Schwingungen nicht deutlich übersteigt, ist es schwierig, den Schussbeginn nur dadurch zu detektieren, dass man die Überschreitung eines bestimmten Schwellenwertes als Kriterium für den Schussbeginn anwendet. Eine bevorzugte Vorgehensweise, um dieses Problem zu lösen, ist unten erläutert (statistische Methoden unter Nutzung der Standardabweichung).

Das vorgeschlagene Verfahren ermöglicht auch eine Regelung der Komponentenströme während eines Schusses.

Das ist besonders für Anwendungen interessant, bei denen Formen mit engen Querschnitten befüllt werden müssen, wobei sich dann ein über den Schuss steigender Gegendruck einstellt. Dieser steigende Gegendruck kann sich auf die Dosiergenauigkeit der Pumpen auswirken. Mit einer schnellen und exakten Regelung, wie sie durch das vorgeschlagene Verfahren ermöglicht wird, ist es möglich, das geforderte Mischungsverhältnis während des Schusses auch bei sich während des Schusses ändernden Bedingungen sehr exakt einzuhalten.

Die Bemühungen der Produzenten von volumetrischen Messinstrumenten hinsichtlich der Steigerung der Genauigkeit der Messinstrumente zielen in erster Linie darauf ab, die Position des rotierenden Messkörpers möglichst exakt bzw. hochaufgelöst und schnell ermitteln zu können. Das ist zwar durchaus zweckdienlich, übersieht aber einen wichtigen Aspekt:
Zahnradzähler unterliegen Fertigungstoleranzen, die dafür verantwortlich sind, dass eine Drehung um ein Vielfaches des mittleren Winkels zwischen zwei benachbarten Zähnen (360°/n; mit n als der Zahl der Zähne) keineswegs immer durch das gleiche Fördervolumen verursacht wird.

Die Folge sind Ungenauigkeiten bei der Auswertung besonders kleiner Messintervalle, bei denen der rotierende Messkörper deutlich weniger als eine volle Umdrehung zurücklegt.

Das vorgeschlagene Verfahren zielt des Weiteren darauf ab, die sich zwar bei jeder Umdrehung periodisch zuverlässig wiederholende, über eine Umdrehung jedoch durchaus nennenswert ungleichförmige Rotation des sich drehenden Messkörpers in zeitunkritischen Momenten möglichst exakt auszuwerten, und diese Daten dann zu benutzen, um in zeitkritischen Momenten möglichst schnell und exakt messen zu können (hierzu kommt die ,,Fehlermaske" zum Einsatz).

Dies führt in Kombination mit der Ermittlung des exakten Schussbeginns und Schussendes zu einer sehr exakten Ermittlung der tatsächlichen Schussgewichte, insbesondere wenn - wie bevorzugt - in der Steuerung auch noch eine Funktion zur Berechnung der Mediendichten in Abhängigkeit von Druck und Temperatur hinterlegt ist.

Der Volumenstromzähler erzeugt laufend Signale als Reaktion auf den durch den Volumenstromzähler fließenden Volumenstrom. In den Momenten, in denen konstante Bedingungen herrschen, werden diese so ausgewertet, dass daraus eine für diese Betriebsbedingungen geltende Fördercharakteristik hergeleitet werden kann. Diese Fördercharakteristik beinhaltet sämtliche Fördervolumina, die zwischen zwei aufeinanderfolgenden Signalen durch den Volumenstromzähler geflossen sind, wobei die Signale vom jeweiligen Sensor wiederholgenau bei einer bestimmten Position eines der rotierenden Messkörper ausgelöst werden.

Dabei dient der Quotient der Zeitdifferenz zwischen zwei aufeinander folgenden Signalen und der für eine volle Umdrehung benötigten Zeit als Maß dafür, welcher Anteil des bei einer vollen Umdrehung geförderten Volumens zwischen zwei definierten aufeinanderfolgenden Signalen gefördert wurde. Damit lassen sich über jeder Umdrehung n Intervalle definieren, wobei n die Zahl der Zähne des Zahnrads des Volumenstromzählers ist. Ein Intervall charakterisiert dabei einen Winkelbereich, in dem der rotierende Messkörper zwischen dem Auslösen zweier aufeinanderfolgender Signale positioniert ist und insbesondere auch ein zugehöriges charakteristisches Fördervolumen, welches die Winkeländerung verursacht hat.

Bei jeder Umdrehung des Messgebers werden n Signale erzeugt, wobei der Wert für n bevorzugt bei mindestens 10 liegt. In einer besonders bevorzugten Ausführungsform werden je Umdrehung mindestens 50 Signale erzeugt. Für die Ermittlung der Fördercharakteristik werden bevorzugt mindestens drei volle Umdrehungen des Zahnradzählers ausgewertet und dann die jeweiligen Mittelwerte gebildet. Dies kann prinzipiell stetig durchgeführt und angepasst werden, solange konstante Bedingungen herrschen.

In einer bevorzugten Ausgestaltung wird diese Fördercharakteristik laufend angepasst. Dabei bekommt jeder Zyklus eine Gewichtung, mit der die Signale dieses Zyklus in die Fördercharakteristik eingehen, abhängig davon, wie groß die Schwankung der Zeitdifferenzen zwischen zwei aufeinanderfolgenden Signalen innerhalb dieses Zyklus war (bzw. der daraus abgeleiteten Fördervolumina).

In den zeitkritischen Momenten lässt sich dann mit Hilfe dieser Fördercharakteristik das Fördervolumen zwischen zwei beliebigen Signalen berechnen, da zuvor das Fördervolumen spezifisch für jedes Intervall bestimmt wurde.

In einer weiteren bevorzugten Ausgestaltung des Verfahrens werden in jedem Zahnradzähler zwei Sensoren vorgesehen, wobei sowohl die steigende Flanke (die entsteht, wenn sich eine Zahnflanke unter dem Sensor befindet bzw. in das Messfeld des Sensors eintritt) als auch die fallende Flanke (die entsteht, wenn eine Zahnflanke aus dem Messfeld des Sensors austritt) ein Signal erzeugt. Somit erzeugt jeder einzelne Zahn phasenverschoben insgesamt vier Signale je Umdrehung, wodurch die Auflösung deutlich gesteigert werden kann.

Es kann ein dynamisches Erzeugen und Anpassen eines Datensatzes vorgesehen werden, mit Hilfe dessen jedem beliebigen Intervall zwischen zwei beliebigen vom Volumenstromzähler erzeugten Signalen ein Dosiervolumen zugeordnet werden kann, welches in diesem Intervall dosiert wurde. Dieser Datensatz kann dadurch erzeugt werden, dass bei möglichst konstantem Volumenstrom und stationären Bedingungen jedem erzeugten Signal ein Zeitstempel zugeordnet wird, wobei die zyklische Wiederholung der Signale von der Steuerung erkannt wird und wobei die Differenz zwischen zwei aufeinander folgenden Zeitstempeln als Maß für das in diesem Zeitintervall dosierte Volumen gewertet und entsprechend umgerechnet wird.

Das Ermitteln des tatsächlichen Schussbeginns kann dadurch erfolgen, dass nach der Erzeugung des elektrischen Signals zum Schussbeginn der Verlauf der Mediendrücke hinsichtlich eines plötzlichen Druckanstiegs analysiert und ausgewertet wird, wobei statistische Methoden verwendet werden, mit denen erkannt wird, ob es sich um normale Druckschwankungen handelt oder um Druckschwankungen, die durch das Verfahren des Steuerschiebers ausgelöst wurden.

Das Ermitteln des tatsächlichen Schussendes kann dadurch erfolgen, dass nach der Erzeugung des elektrischen Signals zum Schussende der Verlauf der Mediendrücke hinsichtlich eines plötzlichen Druckanstiegs analysiert und ausgewertet wird, wobei statistische Methoden verwendet werden, mit denen erkannt wird, ob es sich um normale Druckschwankungen handelt oder um Druckschwankungen, die durch das Verfahren des Steuerschiebers ausgelöst wurden.

Die jeweiligen Daten werden gespeichert.

Ferner kann ein Synchronisieren der gespeicherten Zeitstempel für Schussbeginn und Schussende mit den Signalen der Volumenstromzähler erfolgen, wobei dann mit Hilfe des besagten dynamisch erzeugten Datensatzes für jede Komponente das im Zeitintervall zwischen Schussanfang und Schussende dosierte Volumen ermittelt wird.

Betreffend die Ermittlung des Schussbeginns kann vorgesehen werden, dass für den Druckverlauf innerhalb einer der Reaktivkomponenten-Medienleitungen ein gleitender Mittelwert gebildet wird, wobei fortlaufend die Differenz dieses gleitenden Mittelwertes zum aktuellen Messwert oder alternativ zu einem über einen deutlich kürzeren Zeitraum gebildeten gleitenden Mittelwert gebildet wird. Die Mittelwertbildung kann sowohl softwaretechnisch als auch hardwaretechnisch erfolgen. Der Schussbeginn kann anschließend anhand des zeitlichen Verlaufes besagter Differenz detektiert werden.

Betreffend die Ermittlung des Schussendes kann vorgesehen werden, dass für den Druckverlauf innerhalb einer der Reaktivkomponenten-Medienleitungen ein gleitender Mittelwert gebildet wird, wobei fortlaufend die Differenz dieses gleitenden Mittelwertes zum aktuellen Messwert oder alternativ zu einem über einen deutlich kürzeren Zeitraum gebildeten gleitenden Mittelwert gebildet wird. Die Mittelwertbildung kann sowohl softwaretechnisch als auch hardwaretechnisch erfolgen. Das Schussende kann anschließend anhand des zeitlichen Verlaufes besagter Differenz detektiert werden, wobei das Signal zum Auslösen eines Schussendes als weiteres notwendiges Kriterium herangezogen werden kann.

Die Mediendichten können in der Steuerung sowohl druck- als auch temperaturabhängig hinterlegt sein, wobei während jedes Schusses der Druck und die Temperatur der Reaktivkomponenten gemessen werden und dann die mittlere Mediendichte während des Schusses entsprechend ermittelt wird, so dass anschließend durch Multiplikation der Dosiervolumina mit den Dichten die Dosiermengen errechnet und ausgegeben werden können.

Je Volumenstromzähler können zwei Sensoren verwendet werden, die phasenverschoben Signale erzeugen. Hieraus resultiert der angesprochene Rechteckverlauf des Signals. Dabei können sowohl die ansteigende Flanke als auch die abfallende Flanke dieses Verlaufs ausgewertet werden.

Der erwähnte dynamisch erzeugte Datensatz kann laufend angepasst werden, indem jeder Zyklus zunächst danach gewichtet wird, wie groß die Streuung der Differenz der Zeitstempel zweier aufeinander folgender Signale gleichen Typs ist, wobei ein Zyklus mit einer geringen Streuung eine hohe Gewichtung erhält, während ein Zyklus mit einer großen Streuung eine geringe Gewichtung erhält.

Die Volumenströme der Einzelkomponenten können unmittelbar vor Schussbeginn durch Regelung der Pumpendrehzahl in Abhängigkeit der Abweichung der gemessenen Volumenströme zu den Soll-Volumenströmen eingestellt werden. Dabei kann die Drehzahl der Dosierpumpen zu Schussbeginn konstant gehalten werden.

Vorteilhaft ist, dass das Volumenstrom-spezifische Leitungsvolumen zwischen Volumenstromzähler und Mischkopfdüse klein ist. Der Volumenstromzähler soll demgemäß nahe an der Mischkopfdüse sitzen.

Weiter kann vorgesehen werden, dass die Messwerte der Volumenstrommessung bei der exakten Ermittlung des Schussanfangs mit verwendet werden, wobei eine plötzliche Reduzierung des Volumenstroms als Kriterium für den Schussanfang verwendet wird.

In den Zeichnungen ist ein Ausführungsbeispiel der Erfindung dargestellt.
- Fig. 1: zeigt schematisch einen Nuten-gesteuerten Mischkopf, der mit zwei Reaktivkomponenten (nämlich mit Polyol und mit Isocyanat) gespeist wird, wobei das Einbringen der Reaktivkomponenten in die Mischkammer des Mischkopfs dargestellt ist,
- Fig. 2: zeigt den Verlauf des Drucks über der Zeit für eine der Reaktivkomponenten, wobei im linken Bereich der Verlauf beim Schussbeginn und im rechten Bereich der Verlauf beim Schussende dargestellt ist,
- Fig. 3: zeigt schematisch einen Volumenstromzähler in Form eines Zahnradzählers, welcher mit zwei in Umfangsrichtung eines der Zahnräder versetzt angeordneten Sensoren zur Erfassung der Position der Zähne des Zahnrads ausgestattet ist,
- Fig. 4: zeigt schematisch die von den beiden Sensoren erfassten Signale, die als Rechtecksignale über der Zeit aufgetragen sind, wobei für korrespondierende Flanken des gemessenen Rechteckverlaufs die Zeitintervalle sowie die zugehörigen mittleren Volumenströme im jeweiligen Zeitintervall angedeutet sind,
- Fig. 5: zeigt schematisch im oberen Bereich den Verlauf des Drucks sowie des Volumenstroms über der Zeit während eines Schusses und im unteren Bereich die korrespondierenden Verläufe der erfassten Rechtecksignale der Sensoren und die Zuordnung des Zeitpunkts für den Schussbeginn sowie für das Schussende und
- Fig. 6: zeigt schematisch das Prinzip des Ausgleichs von Fehlerabweichungen in den einzelnen Kammervolumina der Zahnpaare des Zahnradzählers mittels einer Fehlermaske.

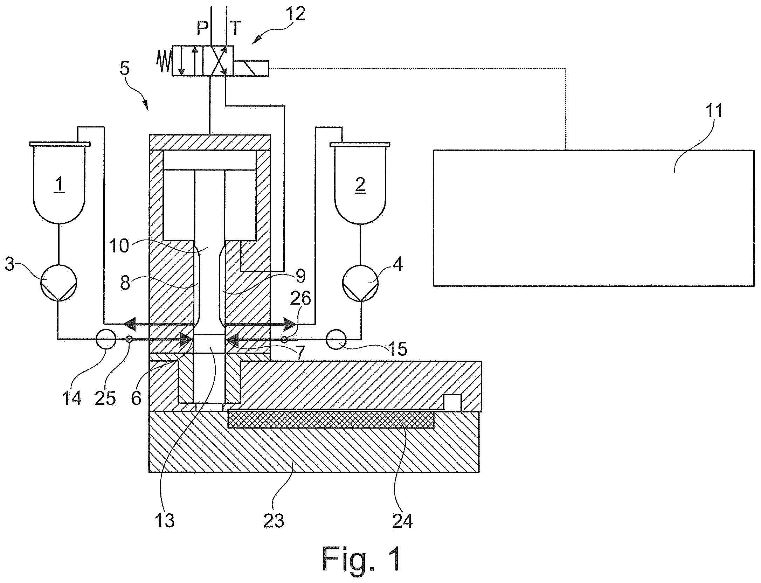

In Figur 1 ist ein Mischkopf 5 zu sehen, mit dem zwei Reaktionskomponenten 1 (Polyol) und 2 (Isocyanat) miteinander vermischt werden, um Polyurethan zu erhalten, welches in ein Werkzeug 23 eingespritzt wird, wodurch ein Formteil 24 produziert wird. Dies erfolgt im an sich bekannten Schussbetrieb, zu dem eingangs die EP 0 976 514 A1 genannt wurde.

Der Mischkopf 5 ist Nuten-gesteuert, d. h. er umfasst einen axial verschiebbaren Steuerschieber 10, der mit Rezirkulationsnuten 8 und 9 für die beiden Komponenten 1, 2 versehen ist. Die Verschiebung des Steuerschieber 10 wird von einer Maschinensteuerung 11 über ein hydraulisches Ventil 12 veranlasst, welches entsprechend angesteuert wird. Die beiden Reaktionskomponenten 1 und 2 können abhängig von der Position des Steuerschiebers 10 entweder im Kreislauf geführt oder in die Mischkammer 13 des Mischkopfs 5 eingespritzt werden; in Figur 1 ist der letztgenannte Fall dargestellt. Hierbei werden die beiden Reaktionskomponenten 1 und 2 über Dosierpumpen 3 und 4 der Mischkammer 13 zugeführt, wobei das zugeführte Volumen über Volumenstromzähler 14 und 15 ermittelt wird. Die beiden Reaktionskomponenten 1 und 2 treten dabei über entsprechende Komponentendüsen 6 und 7 in die Mischkammer 13 ein.

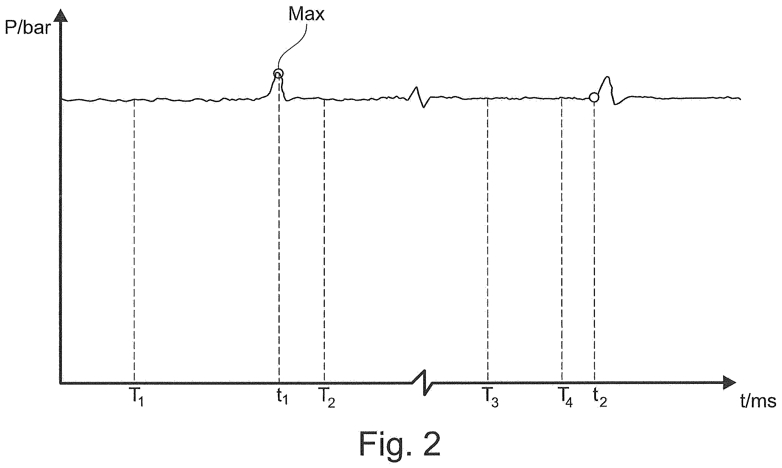

Wesentlich ist, dass die genaue Masse an Reaktionskomponente 1, 2 ermittelt wird, welche der Mischkammer 13 zugeführt wird und aus der das Formteil 24 gebildet wird. Dabei kann - gemäß dem Stand der Technik - mittels eines geeigneten Sensors (Mischkopf-Initiators) die Lage des Steuerschieber 10 detektiert werden, wenn dieser in der Position zu liegen kommt, in der Reaktionskomponenten 1, 2 der Mischkammer 13 zugeführt werden. Dies hat sich allerdings als nicht ausreichend erwiesen, so dass gemäß der vorliegenden Erfindung vielmehr so vorgegangen wird, wie es in Figur 2 illustriert ist:

Nahe der Komponentendüsen 6 und 7 sind Drucksensoren 25 und 26 (s, Fig. 1) angeordnet, mit dem der Druck p der jeweiligen Reaktionskomponente 1, 2 erfasst werden kann. Dieser Druck ist über der Zeit in Figur 2 (für eine der Reaktionskomponenten) schematisch aufgetragen. Zu einem Zeitpunkt T₁ veranlasst die Maschinensteuerung 11 die Betätigung des Ventils 12, so dass der Steuerschieber 10 in die Freigabeposition bewegt wird, in der die Reaktionskomponenten 1, 2 in die Mischkammer 13 gelangen. Zu diesem Zeitpunkt T₁ fließt allerdings noch kein Material. Zu einem späteren Zeitpunkt T₂ erkennt ein nicht dargestellter Endlagen-Sensor (Mischkopf-Initiator), dass der Steuerschieber 10 in der Position angelangt ist, in der die Reaktionskomponenten 1, 2 in die Mischkammer eintreten können. Allerdings fließt schon vorher Material in die Mischkammer 13, d. h. noch bevor der Zeitpunkt T₂ erreicht ist.

Daher wird vorgeschlagen, den Druck p über die Zeit zu überwachen und festzustellen, wann sich ein ,,Peak" ergibt, wie er der linken Hälfte in Figur 2 dargestellt ist und dessen Maximum mit Max bezeichnet ist. Dies ist zum Zeitpunkt t₁ der Fall. Der ,,Peak" ergibt sich infolge des Umstands, dass sehr kurzzeitig beim Umschalten vom Rezirkulationsbetrieb in den Einspritzbetrieb durch die Rezirkulationsnuten eine Absperrung des Fließwegs erfolgt, so dass bei laufenden Dosierpumpen 3, 4 eine Druckerhöhung stattfindet. In dem Moment, wo diese wieder abgebaut wird, liegt ein sicheres Indiz dafür vor, das Material nunmehr in die Mischkammer 13 eintritt.

Folglich kann durch Überwachung des Druckverlaufs über der Zeit und die Ermittlung des Maximum Max der richtige Zeitpunkt t₁ des tatsächlichen Schussbeginns erfolgen.

In der rechten Hälfte von Figur 2 sind die Verhältnisse dargestellt, die sich beim Schussende ergeben. Zum Zeitpunkt T₃ gibt die Maschinensteuerung 11 das Signal an das Ventil 12 zum Vorschieben des Steuerschiebers 10 und damit zum Umschalten vom Einspritzbetrieb in den Rezirkulationsbetrieb. Zu diesem Zeitpunkt fließt allerdings noch Material in die Mischkammer ein. Dies ist auch noch der Fall, wenn der Zeitpunkt T₄ erreicht ist, zu dem der Endlagen-Sensor feststellt, dass der Steuerschieber 10 seine Endlage verlassen hat. Vielmehr ist das tatsächliche Schussende erst zum späteren Zeitpunkt t₂ erreicht, was sich im Druckverlauf durch einen neuerlichen ,,Peak" bemerkbar macht, der durch denselben Effekt bedingt ist wie zum Schussbeginn. Demgemäß wird durch die vorgeschlagene weitere Überwachung des Drucks p ermittelt, wann der Druck ansteigt, so dass der genaue Zeitpunkt t₂ des Schussendes erfasst werden kann.

Zu beiden Zeitpunkten t₁ und t₂ werden "Zeitstempel" gesetzt, die genutzt werden, um festzustellen, welches Volumen zwischen den beiden Zeitpunkten von den Dosierpumpen 2, 3 gefördert wurden, was durch die Volumenstromzähler 14, 15 ermittelt wird.

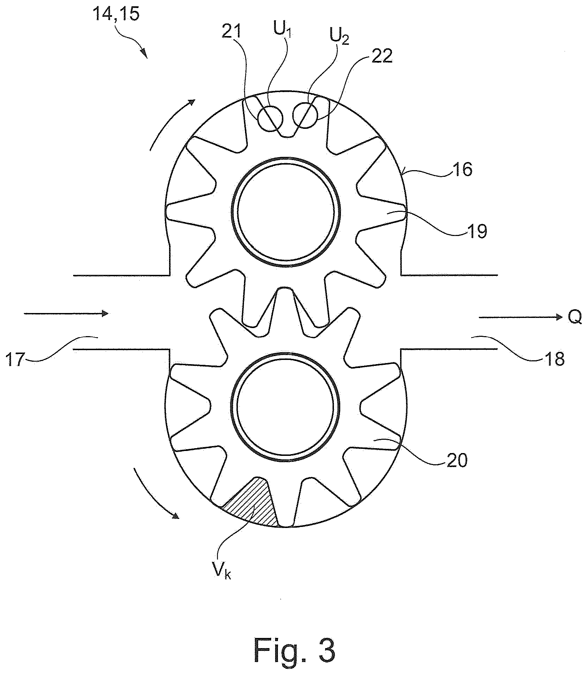

Hierzu wird auf Figur 3 verwiesen, wo ein Volumenstromzähler 14, 15 schematisch skizziert ist. In einem Gehäuse 16 mit einer Einlassöffnung 17 und einer Auslassöffnung 18 sind zwei zusammenwirkende drehbar gelagerter Körper in Form zweier Zahnräder 19 und 20 angeordnet, die miteinander kämmen. Tritt ein Volumenstrom Q in die Einlassöffnung 17 ein, drehen sich die Zahnräder 19, 20, was zur Messung des geförderten Volumens genutzt wird. Wenn sich die Zahnräder 19, 20 um einen Zahn weitergedreht haben, ist ein Kammervolumen V_{K} gefördert worden, welches für den Volumenstromzähler festliegt. Hieraus kann dann der Volumenstrom als Volumen pro Zeit und über Integration des Volumenstroms über der Zeit auch das insgesamt geförderte Volumen ermittelt werden.

Somit kann generell durch Protokollierung des Volumenstroms durch die Volumenstromzähler 14, 15 erfasst werden, welches Volumen zwischen den Zeitpunkten t₁ und t₂ die Zähler passierten, wozu die genannten "Zeitstempel" für die Zeitpunkte t₁ und t₂ mit den korrespondierenden Daten abgeglichen werden, die für die beiden Volumenstromzähler 14, 15 erfasst wurden. Hieraus kann dann in der Steuerung nicht nur das gesamte Volumen bestimmt werden, welches für die beiden Reaktionskomponenten 1, 2 zwischen den Zeitpunkten t₁ und t₂ in die Mischkammer 13 gelangte, sondern über die abgespeicherte Dichte der beiden Medien (in Abhängigkeit von Druck und Temperatur) auch die entsprechende Masse der beiden Reaktionskomponenten 1, 2.

Ein Problem ergibt sich dadurch, dass handelsübliche Volumenstromzähler, die hinreichend preiswert verfügbar sind, nur eine beschränkte Genauigkeit haben, da sie Fertigungsungenauigkeiten aufweisen.

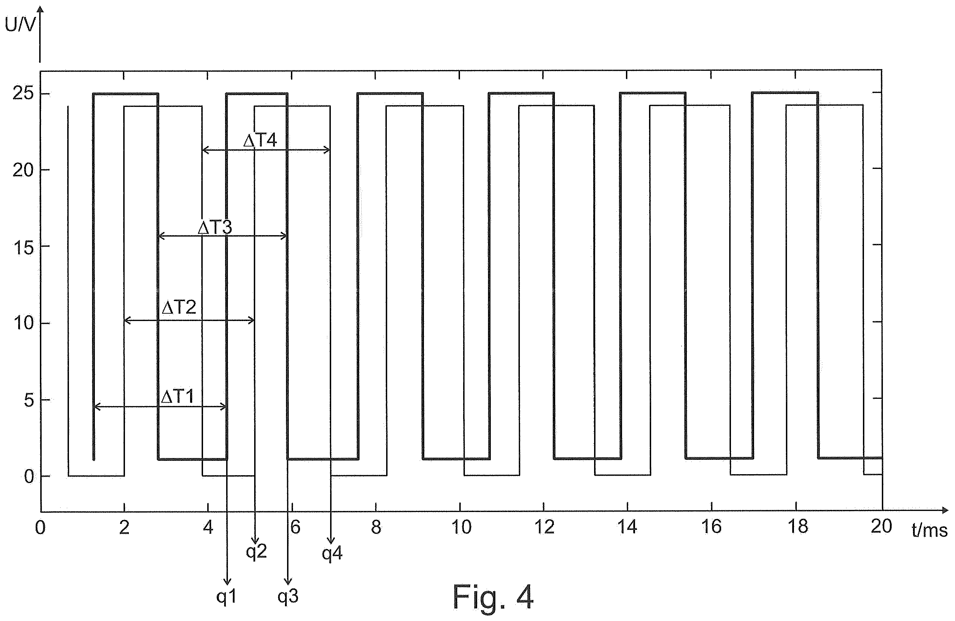

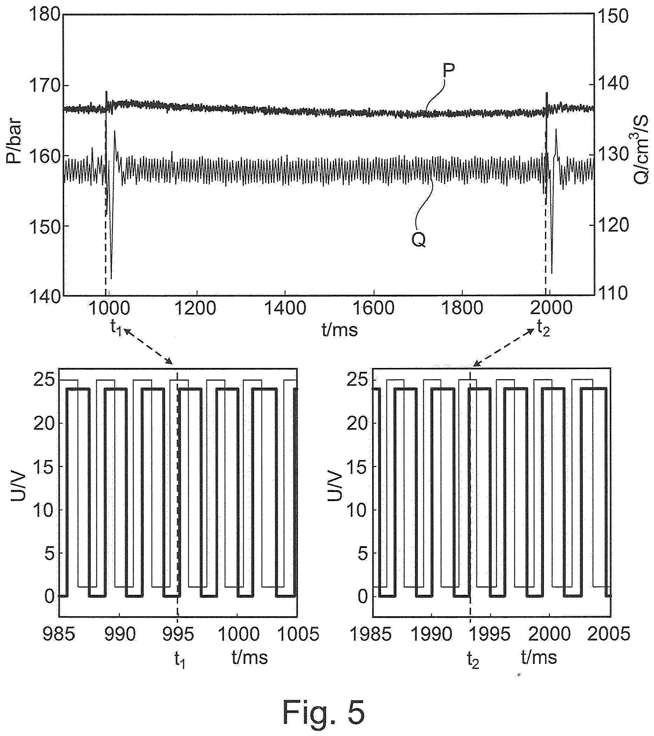

Um diesem Problem entgegenzuwirken, wird die Vorgehensweise vorgeschlagen, wie sie in den Figuren 4 und 5 illustriert ist. Zunächst ist anzumerken, dass in den Volumenstromzählern 14, 15 an einem der Zahnräder 19 (s. Fig. 3) zwei in Umfangsrichtung beabstandete Sensoren 21 und 22 angeordnet sind, die die Lage der Zahnflanken erfassen können. Die Umfangsbeabstandung der beiden Sensoren 21, 22 entspricht dabei bevorzugt der Hälfte des Abstands zwischen zwei aufeinanderfolgenden Zähnen des Zahnrad 19. Aber auch andere Abstände können vorgesehen werden (z. B. bei 13 Zähnen der Zahnräder 2,5 Mal der Abstand zweier aufeinander folgender Zähne, was dann zu einen Winkelversatz der beiden Sensoren von 2,5 x 360° / 13 = 69,2° führt).

Das Signal der beiden Sensoren 21, 22 ist als Spannungssignal über der Zeit in Figur 4 aufgetragen (wobei zwecks Übersichtlichkeit die beiden aufgenommenen Funktionen in Ordinatenrichtung etwas versetzt dargestellt sind). Zu erkennen ist, dass abhängig von der Lage eines Zahns des Zahnrad 19 im Gehäuse 16 ein Rechteckverlauf des Spannungssignals vorliegt, aus dem geschlossen werden kann, wann die Zahnflanke die jeweiligen Sensoren 21, 22 passiert. Somit kann durch Auswertung des Spannungsverlaufs in der Maschinensteuerung 11 ermittelt werden, wann infolge der aufsteigenden Flanke des Verlaufs eine Zahnflanke in den Bereich des Sensors eintritt bzw. infolge der absteigenden Flanke diese wieder verlässt; dies erfolgt (wegen der Beabstandung der Sensoren 21, 22 in Umfangsrichtung) phasenverschoben für beide Sensoren 21, 22, deren Signale auf separaten Kanälen erfasst werden. Hieraus kann in der Maschinensteuerung 11 auch erfasst werden, wann sich die Funktionen periodisch wiederholen, um insofern die Zeitintervalle ΔT1, ΔT2, ΔT3 und ΔT4 (s. Fig. 4) zu erfassen, die benötigt werden, bis der nächste Zahn in dieselbe Position gelangt (für alle Anfangs- und Endzeiten der Signale können "Zeitstempel" protokolliert werden, um eine spätere Zuordnung zu den "Zeitstempeln" für den genauen Schussbeginn und das genaue Schussende herstellen zu können). Hieraus lassen sich dann Teilvolumenströme q1, q2, q3 und q4 ermitteln, die in den jeweiligen Zeitabständen gefördert wurden. Durch genaue Protokollierung der Zeiten und Auswertung des Kurvenverlauf gemäß Figur 4 kann die Maschinensteuerung 11 somit relativ fein aufgelöst auch die Teilvolumenströme verfolgen, die während der Zeit gefördert werden, wenn sich das Zahnrad 19 um einen einzelnen Zahn weitergedreht hat.

Somit wird jede Flanke gemäß der Darstellung in Figur 4 detektiert, mit einem absoluten Zeitstempel versehen und unter Angabe des zugehörigen Flankentyps abgespeichert. Sobald ein Flankentyp zum zweiten Mal detektiert wurde, wird die zeitliche Differenz zwischen dem aktuellen und dem vorherigen Zeitstempel des gleichen Flankentyps gebildet. Durch die ausschließliche Differenzbildung von Zeitstempeln des gleichen Flankentyps wirkt sich die Fertigungsstreuung des Zahnradzählers in Bezug auf Tastverhältnis und Phasenverschiebung der Messkanäle nicht auf den gemessenen Volumenstrom aus. Dennoch wird eine 4-fach höhere zeitliche Auflösung erreicht, als wenn nur ein einziger Flankentyp gemessen und ausgewertet wird. Durch die Messung der Zeitdifferenz zwischen zwei Flanken des gleichen Typs wird mit Hilfe des im Datenblatt des Zahnradzählers angegebenen Zahnvolumens der momentane Volumenstrom berechnet, indem das Zahnvolumen durch die Zeitdauer dividiert wird. Durch Auswertung der Reihenfolge der verschiedenen Flankentypen wird eine Änderung der Durchflussrichtung erkannt, so dass positive und negative Volumenströme gemessen werden können. Während der Kalibrierung wird die positive Durchflussrichtung automatisch erkannt, wodurch diese unabhängig von der Einbauposition des Zahnradzählers ist.

In Figur 5 ist hierzu illustriert, wie die Zuordnung des Zeitpunkts des tatsächlichen Schussbeginns t₁ und der Zeitpunkt des tatsächlichen Schussendes t₂ über die entsprechend erfassten "Zeitstempel" den von den Sensoren 21, 22 ermittelten Signalen erfolgt, um dann durch Aufsummieren der einzelnen Teilvolumina zu bestimmen, welches Volumen insgesamt zwischen t₁ und t₂ gefördert wurde.

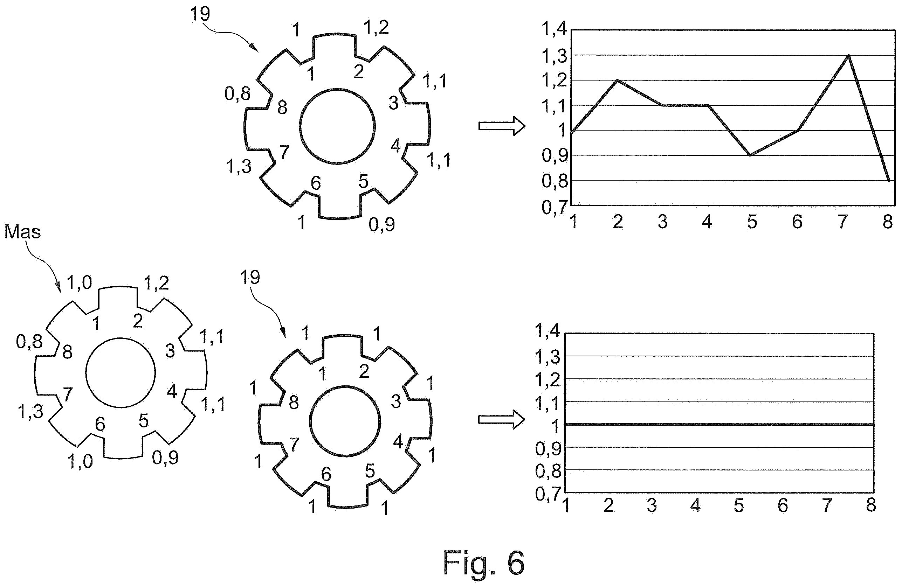

Dem Problem von Ungenauigkeiten der Zahnräder 19, 20 in den Volumenstromzählern 14, 15 kann mit einer Vorgehensweise begegnet werden, wie sie in Figur 6 schematisch illustriert ist.

In der Bildmitte ist schematisch das Zahnrad 19 dargestellt, welches zwecks leichterer Erläuterung hier mit acht Zähnen und demgemäß mit acht Zahnlücken versehen ist. Durch das Zusammenwirken mit dem korrespondierenden (nicht dargestellten) Zahnrad 20 wird, wie erläutert, ein gewisses Kammervolumen V_{K} (s. Fig. 3) pro Zahnlücke gefördert. Infolge von Fertigungsungenauigkeiten schwankt allerdings das tatsächliche geförderte Volumen von Zahnlücke zu Zahnlücke. Durch die genaue Ermittlung der Lage des Zahnrad (wie in den Figuren 3 und 4 gezeigt und oben erläutert) ist es möglich, jeder individuellen Zahnlücke 1 bis 8 des Zahnrad 19 einen prozentualen Wert zuzuweisen, der darüber Auskunft gibt, wie hoch das individuelle Kammervolumen der betreffenden Zahnlücke in Relation zu einem Durchschnittswert über alle Zahnlücken liegt. So wurde im in Figur 6 dargestellten Ausführungsbeispiel für die Zahnlücke 1 des Zahnrad 19 keine Abweichung vom Durchschnittswert festgestellt (s. Ziffer "1" bei Zahnlücke 1), während in der Zahnlücke 2 ein um 20 % gegenüber dem Durchschnittswert erhöhter Wert gemessen wurde (s. Ziffer "1,2" bei Zahnlücke 2); für die Zahnlücke 3 ergab sich ein um 10 % gegenüber dem Durchschnittswert erhöhter Wert (s. Ziffer "1,1" bei Zahnlücke 3), etc. Diese Korrektur-Werte sind in dem Graphen rechts neben dem oben dargestellten Zahnrad 19 in Fig. 6 wiedergegeben und so in der Maschinensteuerung abgespeichert.

Hieraus wird eine Fehlermaske Mas berechnet, wie sie links unten in Figur 6 dargestellt ist. Zu erkennen ist, dass für die jeweiligen Zahnlücken 1 bis 8 hier diejenigen Werte bestimmt werden, mit denen im Betrieb des Volumenstromzählers die gemessenen Werte korrigiert werden, um die tatsächlichen Werte zu erhalten, d. h. die Werte der einzelnen Zahnlücken werden durch die korrespondierenden Werte der Fehlermaske dividiert. Hiernach wird beispielsweise für die Zahnlücke 1 ein Korrekturwert von "1,0" vorgegeben (weil für diese Zahnlücke keine Abweichung gegenüber dem Durchschnittswert festgestellt wurde), während für die Zahnlücke 2 ein Korrekturwert von "1,2" gespeichert ist, um das für diese Zahnlücke erhöhte Volumen zu reduzieren (die Division des festgestellten Werts von 1,2 für die Zahnlücke durch den korrespondierenden Wert der Fehlermaske liefert genau den Wert 1), etc.

Die Berücksichtigung der Fehlermaske Mas im Betrieb des Volumenstromzählers führt dann - wie für das Zahnrad 19 in der Bildmitte von Figur 6, unten, und rechts daneben schematisch illustriert - dazu, dass für jede Zahnlücke der korrekte Wert des Fördervolumens berücksichtigt wird, der die vorhandenen Fehler eliminiert.

Somit können Teilungsfehler der Zahnräder sowie geometrische Ungenauigkeiten der Zahnflanken und auch weitere mögliche Störungen eliminiert werden, da jeweils Signale erfasst werden, die eine charakteristische Abweichung vom tatsächlichen physikalischen Wert angeben, welche sich mit jeder Umdrehung des Zahnrads wiederholt.

Generell kann zwar durch Mittelung von Signalen über ganze Zahnradumdrehungen hinweg der zyklisch auftretende Messfehler minimiert und so der Messwert besser dem tatsächlichen physikalischen Wert angenähert werden, was bereits einen Vorteil in Bezug auf die Messgenauigkeit erbringt, allerdings den Nachteil einer deutlich verringerten Messdynamik gegenüber der Messung von Einzelsignalen hat. Um den Vorteil der höheren Messgenauigkeit ohne den Nachteil der verringerten Messdynamik zu erhalten, wird die Fehlermaske Mas eingesetzt.

Die Ermittlung der Fehlermaske Mas erfolgt vollautomatisch in der Maschinensteuerung und kann über eine Schnittstelle an den Anwender ausgegeben werden.

Jedes neue gemessene Signal wird nun durch Division mit den Werten der Fehlermaske derart manipuliert bzw. korrigiert, dass die bekannte charakteristische Abweichung dieses Signals kompensiert wird. Die beschriebene Korrektur der Signale führt zu einem deutlich weniger verrauschten Volumenstromsignal und verbessert dadurch alle nachfolgenden Prozesse, die von der Volumenstrommessung abhängig sind, wie z.B. eine Regelung des Volumen- oder Massenstromes oder die Messung dosierter Volumina oder Massen.

Darüber hinaus macht der zeitliche Verlauf der Fehlermaske eine mögliche Veränderung des Zahnradzählers aufgrund von Verschleiß oder anderen Ursachen sichtbar und kann als Indiz für einen notwendigen Austausch des Zahnradzählers herangezogen werden. Somit bietet die Fehlermaske eine Möglichkeit zur Durchführung eines Condition Monitoring am Zahnradzähler.

Somit wird eine hochdynamische Messung der momentanen Volumenströme einer Dosiermaschine unter Verwendung handelsüblicher Zahnradzähler möglich, die kostengünstig umsetzbar ist. Das Messrauschen kann durch die erläuterte automatische Erkennung und Kompensation von zyklischen Signalfehlern und geometrischen Ungenauigkeiten der Zahnradzähler verringert werden. Hierdurch können die momentanen Mischungsverhältnisse zunächst in Volumenanteilen und dann über die Multiplikation mit der Dichte auch in Massenanteilen bestmöglich bestimmt werden.

Für die Dichte können in Abhängigkeit des gemessenen Drucks (insbesondere des durchschnittlichen Druckes während des Dosiervorgangs) sowie der gemessenen Temperatur in der Maschinensteuerung die aktuellen Werte berechnet werden, wozu Vergleichskurven für die Dichte vorliegen, die für verschiedene Temperaturen und Drücke für die jeweilige Reaktionskomponente aufgenommen wurden. Bei einem konkret vorliegenden Druck sowie einer konkret vorliegenden Temperatur kann somit durch Interpolation zwischen Kurven die aktuelle Dichte bestimmt werden. Hierzu kann auch die Methode der multiplen linearen Regression angewendet werden. Durch diese Methode wird es möglich, nach Erfassung einer hinreichenden Anzahl von Messwert-Tripeln für Dichte, Druck und Temperatur die Dichte zu berechnen, die bei einem gemessenen Druck und einer gemessenen Temperatur vorliegt.

Sofern durch das vorgeschlagene Verfahren festgestellt wird, dass vorgegebene Volumina bzw. Massen nicht vorliegen oder ein sonstiges und typisches Verhalten am Mischkopf gegeben ist, kann ein frühzeitiger Abbruch des Produktionsvorgangs vorgenommen werden, um Ausschuss zu reduzieren.

Die während des Produktionsvorgangs gemessenen Daten können als Dokumentation ausgegeben werden, um einen Nachweis darüber zu führen, dass der Herstellungsprozess ordnungsgemäß abgelaufen ist.

Die signaltechnische Auswertung insbesondere des Druckverlaufs über der Zeit kann fachmännisch erfolgen und ist ohne große Probleme realisierbar.

Für den vorliegenden Anwendungsfall hat es sich besonders bewährt, dass eine statistische Auswertung der aufgenommenen Daten des Drucks zu Grunde gelegt wird, um das Auffinden des oben genannten "Peak" zum Schussbeginn bzw. zum Schussende effektiv zu gestalten. Hierbei werden die aufgezeichneten Einzelwerte für den Druck einer statistischen Analyse unterzogen und die Standardabweichung für die Messwerte ermittelt, gegebenenfalls für jeweils definierte Zeitfenster. Zur Erkennung eines tatsächlichen Anstiegs im Drucksignal kann dann die Überschreitung einer Anzahl von Standardabweichungen zu Grunde gelegt werden. Demgemäß wird laufend eine gleitende Standardabweichung des Druckes berechnet, welche ein Maß für die übliche vorkommende Signalschwankung darstellt. Gemäß der Gaußschen Normalverteilung liegen 99,73 % aller Werte im Bereich vom Mittelwert +/- 3 Standardabweichungen. Übersteigt ein Messwert die Grenze von Mittelwert plus 3 Standardabweichungen, so wird dies als beginnender Druckpeak interpretiert und der genaue Zeitpunkt gespeichert, zu dem dieser auftritt. Im Anschluss wird für eine einstellbare Zeitdauer nach dem Maximum im Drucksignal gesucht und der entsprechende Zeitpunkt ebenfalls abgespeichert.

Bei der Vermischung mehrerer Medien im Mischkopf liegt je Medium ein eigenes Drucksignal und somit auch je Medium ein eigener Zeitpunkt für Anfang und Maximum des Druckpeaks vor. Bevorzugt liegen somit in der Maschinensteuerung für jeden Schaltvorgang des Steuerstößels die Zeitstempel der folgenden, untereinander synchronisierten Ereignisse vor: steigende oder fallende Flanke im Schusssignal, steigende oder fallende Flanke des Signals des Mischkopf-Initiators, Beginn des Druckanstieges je Medienstrom, Maximum des Druckpeaks je Medienstrom.

In der Maschinensteuerung können diese Daten priorisiert und daraus der resultierende Zeitpunkt für den Anfang und das Ende des Dosiervorgangs bestimmt werden. Eine Priorisierung ist sinnvoll, da die Erkennung der Druckpeaks eine verbleibende statistische Unsicherheit aufweist, d. h. ein Peak kann unerkannt bleiben. Wenn mindestens ein Druckpeak erkannt wurde, dann liefert dieser den genauesten Zeitpunkt für das entsprechende Ereignis. Ebenso ist ein Betrieb des Mischkopfes auch ohne oder mit defektem Näherungsschalter (Mischkopf-Initiator) möglich, somit kann auch dieses Signal ausbleiben.

Ist das Signal des Mischkopf-Initiators vorhanden, so ist der dadurch ermittelte Zeitpunkt für das Ereignis ungenauer, als der des "Peak", aber genauer als der des Schusssignals. Lediglich das Schusssignal ist absolut verlässlich, da dieses erforderlich ist, um das Ventil zu betätigen, dieses weist allerdings im Vergleich zu den anderen Signalen die größte Streuung auf und wird damit am ungenauesten bewertet. Die höchste Priorität wird also dem "Peak"-Signal zugeordnet, die zweithöchste dem Signal des Mischkopf-Initiators und die niedrigste dem Schusssignal.

Durch Differenzbildung der Zeitstempel von Ende und Anfang des Dosiervorgangs kann die Dauer des Dosiervorgangs, d. h. die Dosierzeit, gebildet und abgespeichert werden. Dazu wird die Signalform gemäß der beschriebenen Priorisierung abgespeichert, mit Hilfe welcher die Dosierzeit ermittelt wurde. Zur Ermittlung der Schussdauer wird aus den Zeitstempeln des "Peak"-Finding je ein Mittelwert über alle an der Dosierung beteiligten Medien gebildet. Auf dieses Weise werden der Anfangs- und Endzeitpunkt, sowie die Dauer eines Dosiervorgangs verlässlich und mit der bestmöglichen zeitlichen Auflösung gemessen. Aus diesen Zeiten kann außerdem die zeitliche Verzögerung zwischen Schusssignal, Signal des Mischkopf-Initiators und Druckpeak ermittelt werden und daraus durch statistische Auswertung Rückschlüsse auf den Zustand des Steuerstößels und dessen Ansteuerung gezogen werden. Dies kann wiederum für ein Condition Monitoring des Steuerstößels und der Ansteuerung verwendet werden.

Außerdem werden die Zeitstempel der genannten Ereignisse mit den Signalen der Zahnradzähler synchronisiert und dadurch eine Messung der während des Dosiervorgangs geflossenen Volumina und Massen ermöglicht.

### Bezugszeichenliste:

- 1: Reaktionskomponente (Polyol)
- 2: Reaktionskomponente (Isocyanat)
- 3: Dosierpumpe
- 4: Dosierpumpe
- 5: Nuten-gesteuerter Mischkopf
- 6: Komponentendüse
- 7: Komponentendüse
- 8: Rezirkulationsnut
- 9: Rezirkulationsnut
- 10: Steuerschieber
- 11: Maschinensteuerung
- 12: hydraulisches Ventil
- 13: Mischkammer
- 14: Volumenstromzähler
- 15: Volumenstromzähler
- 16: Gehäuse
- 17: Einlassöffnung
- 18: Auslassöffnung
- 19: drehbar gelagerter Körper (Zahnrad)
- 20: drehbar gelagerter Körper (Zahnrad)
- 21: Sensor
- 22: Sensor
- 23: Werkzeug
- 24: Formteil
- 25: Drucksensor
- 26: Drucksensor

- t₁: Zeitpunkt des tatsächlichen Schussbeginns
- t₂: Zeitpunkt des tatsächlichen Schussendes

- T₁: Zeitpunkt des Signals an das Ventil 12 zum Schussbeginn
- T₂: Zeitpunkt des Ansprechens des Mischkopf-Initiators
- T₃: Zeitpunkt des Signals an das Ventil 12 zum Schussende
- T₄: Zeitpunkt des Endes des Signals vom Mischkopf-Initiator

- Max: Maximum der Druckspitze beim Schussbeginn
- Mas: Fehlermaske

- Q: Volumenstrom
- p: Druck
- V_{K}: Kammervolumen eines Zahnpaars

## Patentansprüche

1. Verfahren zum Herstellen von Bauteilen aus Polyurethan im Schussverfahren, bei dem mindestens zwei Reaktionskomponenten (1, 2) mittels Dosierpumpen (3, 4), insbesondere bei Dosierdrücken von mindestens 50 bar, in einen Nuten-gesteuerten Mischkopf (5) gefördert werden,
wobei die Reaktionskomponenten (1, 2) zunächst im Kreislauf durch eine jeweilige Komponentendüse (6, 7) über eine Rezirkulationsnut (8, 9) in einem Steuerschieber (10) im Kreislauf zurück in einen Vorratsbehälter gefördert werden,
wobei der Schussbeginn durch ein von einer Maschinensteuerung (11) ausgegebenes elektrisches Signal eingeleitet wird, wobei in Folge dessen ein hydraulisches Ventil (12) geschaltet wird und daraufhin der Steuerschieber (10) aus der Kreislauf-Position in die Schuss-Position verfährt, so dass die Reaktionskomponenten (1, 2) in die Mischkammer (13) eingetragen, dort miteinander vermischt und anschließend ausgetragen werden,
wobei anschließend das Schussende durch Wegnahme des von der Maschinensteuerung (11) ausgegebenen elektrischen Signals eingeleitet wird, wobei in Folge dessen das hydraulische Ventil (12) wieder geschaltet wird und daraufhin der Steuerschieber (10) aus der Schuss-Position zurück in die Kreislauf-Position verfährt, so dass die Reaktionskomponenten (1, 2) wieder über die Rezirkulationsnut (8, 9) im Steuerschieber (10) im Kreislauf zurück in den Behälter gefördert werden,
wobei durch den Mischkopf (5) beim Verfahren des Steuerschiebers (10) aus der Kreislauf-Position in die Schuss-Position und umgekehrt kurzzeitig die Medienströme bei laufenden Dosierpumpen (3, 4) unterbrochen werden,
wobei die geförderten Volumenströme zwischen Dosierpumpe (3, 4) und Mischkopf durch jeweils einen Volumenstromzähler (14, 15) gefördert werden, welcher zumindest aus einem Gehäuse (16) mit einer Einlassöffnung (17) und einer Auslassöffnung (18) und zumindest zwei in diesem Gehäuse zusammenwirkenden, drehbar gelagerten Körpern (19, 20), insbesondere Zahnrädern, besteht, wobei diese drehbar gelagerten Körper (19, 20) als Reaktion auf einen durch den Volumenstromzähler geförderten Volumenstrom (Q) in Rotation versetzt werden,
**dadurch gekennzeichnet,**
**dass** das Verfahren die Schritte aufweist:
a) Ermitteln des tatsächlichen Schussbeginns dadurch, dass nach der Erzeugung des elektrischen Signals zum Schussbeginn der Verlauf des jeweiligen Drucks (p) der Reaktionskomponente (1, 2) ausgewertet und der Zeitpunkt bestimmt wird, zu dem die Reaktionskomponente (1, 2) in die Mischkammer (13) des Mischkopfs (5) eintritt und Abspeichern des Zeitpunkts (t₁) des tatsächlichen Schussbeginns,
b) Ermitteln des tatsächlichen Schussendes dadurch, dass nach der Erzeugung des elektrischen Signals zum Schussende der Verlauf des jeweiligen Drucks (p) der Reaktionskomponente (1, 2) ausgewertet und der Zeitpunkt bestimmt wird, zu dem die Reaktionskomponente (1, 2) nicht mehr in die Mischkammer (13) des Mischkopfs (10) eintritt und Abspeichern des Zeitpunkts (t₂) des tatsächlichen Schussendes,
c) Ermitteln des geförderten Volumens der Reaktionskomponenten (1, 2) mittels der Volumenstromzähler (14, 15) der jeweiligen Reaktionskomponenten (1, 2), welches von den Dosierpumpen (3, 4) im Zeitraum zwischen dem Zeitpunkt des tatschlichen Schussbeginns (t₁) und dem Zeitpunkt des tatschlichen Schussendes (t₂) gefördert wurde und Ausgabe der jeweils ermittelten Volumina.

2. Verfahren nach Anspruch 1, **dadurch gekennzeichnet, dass** bei der Durchführung der Schritte a) und b) von Anspruch 1 der zeitliche Verlauf des Drucks (p) der jeweiligen Reaktionskomponente (1, 2) analysiert wird, wobei der Maximalwert des Drucks und/oder ein vorgegebener Grenzwert für die Druckänderung über der Zeit betrachtet werden.

3. Verfahren nach Anspruch 2, **dadurch gekennzeichnet, dass** bei der Durchführung des Schritts a) von Anspruch 1 zwecks Feststellung des Schussbeginns das Maximum (Max) einer auftretenden Druckspitze ermittelt wird und der Zeitpunkt des Auftretens der Druckspitze als Zeitpunkt (t₁) des tatsächlichen Schussbeginns festgelegt wird.

4. Verfahren nach Anspruch 2, **dadurch gekennzeichnet, dass** bei der Durchführung des Schritts b) von Anspruch 1 zwecks Feststellung des Schussendes der Anstieg des Druckverlaufs ermittelt wird und der Zeitpunkt unmittelbar vor dem Ansteigen des Drucks (p) als Zeitpunkt (t₂) des tatsächlichen Schussendes festgelegt wird.

5. Verfahren nach einem der Ansprüche 1 bis 4, **dadurch gekennzeichnet, dass** in der Maschinensteuerung (11) Daten für die Dichte der Reaktionskomponenten in Abhängigkeit vom Druck und von der Temperatur der Reaktionskomponente (1, 2) hinterlegt sind, wobei der Druck der Reaktionskomponenten zwischen dem Zeitpunkt des Schussbeginns (t₁) und dem Zeitpunkt des Schussendes (t₂), insbesondere der durchschnittliche Druck während der genannten Zeitpunkte, sowie die Temperatur der Reaktionskomponenten (1, 2) gemessen und hieraus die tatsächliche Dichte der Reaktionskomponenten (1, 2) bestimmt wird.

6. Verfahren nach Anspruch 5, **dadurch gekennzeichnet, dass** aus den bei Schritt c) von Anspruch 1 ermittelten Volumina der Reaktionskomponenten (1, 2) und den ermittelten tatsächlichen Dichten der Reaktionskomponenten (1, 2) die geförderte Masse der Reaktionskomponenten (1, 2) bestimmt wird.

7. Verfahren nach einem der Ansprüche 1 bis 6, **dadurch gekennzeichnet, dass** für die Ermittlung des geförderten Volumens gemäß Schritt c) von Anspruch 1 wie folgt vorgegangen wird:
A) Kalibrierung des Volumenstromzählers (14, 15) und Festlegen einer Fehlermaske (Mas) durch:
A1): Ermittlung des geförderten Volumens für jedes zusammenwirkende Zahnpaar der drehbar gelagerten Körper (19, 20);
A2): Bilden des Durchschnittswerts des geförderten Volumens über alle Zahnpaare;
A3): Bestimmung der Abweichung des geförderten Volumens jedes Zahnpaars vom Durchschnittswert und Speichern der ermittelten Abweichungen (Mas);
B) Bei der Ermittlung des während des Zeitpunkts des tatschlichen Schussbeginns (t₁) und dem Zeitpunkt des tatschlichen Schussendes (t₂) geförderten Volumen gemäß Schritt c) von Anspruch 1:
B1): Bestimmung des geförderten Volumens für alle während des Schussbeginns und Schussendes zum Einsatz gekommenen Teilvolumina der Zahnpaare unter Berücksichtigung der Abweichungen vom Durchschnittswert unter Nutzung der Fehlermaske (Mas);
B2): Aufsummieren aller Teilvolumina zwecks Erhalts des zwischen dem Schussbeginn und dem Schussende insgesamt geförderten Volumens.

8. Verfahren nach Anspruch 7, **dadurch gekennzeichnet, dass** für die Ermittlung gemäß Schritt A1) von Anspruch 7 zwei Sensoren (21, 22) zum Einsatz kommen, die die Lage der Zahnflanken oder Zahnköpfe der drehbar gelagerten Körper (19, 20) erfassen und jeweils in ein Rechtecksignal umwandeln, wobei das Rechtecksignal genutzt wird, um die Lage von aufeinander folgenden Zähnen der drehbar gelagerten Körper (19, 20) zu erfassen.

9. Verfahren nach Anspruch 8, **dadurch gekennzeichnet, dass** die beiden Sensoren (21, 22) derart versetzt zueinander angeordnet sind, dass phasenversetzt die Lage der aufeinander folgenden Zahnflanken oder Zahnköpfe der drehbar gelagerten Körper (19, 20) erfasst werden können.

10. Verfahren nach einem der Ansprüche 7 bis 9, **dadurch gekennzeichnet, dass** die Kalibrierung und das Festlegen der Fehlermaske (Mas) gemäß Schritt A) von Anspruch 7 periodisch wiederholt wird.

## Claims

1. Method for the production of polyurethane components by the shot method, in which at least two reaction components (1, 2) are conveyed into a groove-controlled mixing head (5) by means of metering pumps (3, 4), in particular at metering pressures of at least 50 bar,
wherein the reaction components (1, 2) are first conveyed in circulation through a respective component nozzle (6, 7) via a recirculation groove (8, 9) in a control slide (10) in circulation back into a storage container,
wherein the shot start is initiated by an electrical signal emitted by a machine control (11), as a result of which a hydraulic valve (12) is switched and the control slide (10) then moves from the circulation position into the shot position, so that the reaction components (1, 2) are entered into the mixing chamber (13), where they are mixed together and then discharged,
wherein the shot end is then initiated by removing the electrical signal issued by the machine control (11), as a result of which the hydraulic valve (12) is switched again and the control slide (10) then moves from the shot position back into the circulation position, so that the reaction components (1, 2) are conveyed back again into the container via the recirculation groove (8, 9) in the control slide (10) in circulation, wherein the media flows are briefly interrupted by the mixing head (5) while the metering pumps (3, 4) are running when the control slide (10) is moved from the circulation position to the shot position and vice versa,
wherein the conveyed volume flows between the metering pump (3, 4) and the mixing head are each conveyed through a volume flow meter (14, 15), which consists of at least one housing (16) with an inlet opening (17) and an outlet opening (18) and at least two rotatably mounted bodies (19, 20), in particular gear wheels, co-operating in this housing, wherein these rotatably mounted bodies (19, 20) are set in rotation in response to a volume flow (Q) conveyed by the volume flow meter,
**characterized in**
**that** the method comprises the steps of:
a) Determining the actual shot start by analysing the course of the respective pressure (p) of the reaction component (1, 2) after the electrical signal for the shot start has been generated and determining the time point at which the reaction component (1, 2) enters the mixing chamber (13) of the mixing head (5) and storing the time point (t₁) of the actual shot start,
b) Determining the actual shot end by analysing the course of the respective pressure (p) of the reaction component (1, 2) after the electrical signal for the shot end has been generated and determining the time point at which the reaction component (1, 2) no longer enters the mixing chamber (13) of the mixing head (10) and storing the time point (t₂) of the actual shot end,
c) Determining of the delivered volume of the reaction components (1, 2) by means of the volume flow meter (14, 15) of the respective reaction components (1, 2), which was delivered by the metering pumps (3, 4) in the period between the time point of the actual shot start (t₁) and the time point of the actual shot end (t₂) and outputting the respectively determined volumes.

2. Method according to claim 1, **characterised in that**, when steps a) and b) of claim 1 are carried out, the variation in time of the pressure (p) of the respective reaction component (1, 2) is analysed, wherein the maximum value of the pressure and/or a predetermined limit value for the pressure change over time being considered.

3. Method according to claim 2, **characterised in that**, when carrying out step a) of claim 1, the maximum (Max) of an occurring pressure peak is determined for the purpose of determining the shot start and the time point of occurrence of the pressure peak is determined as the time (t₁) of the actual shot start.

4. Method according to claim 2, **characterised in that**, when carrying out step b) of claim 1, the increase in the pressure curve is determined for the purpose of determining the shot end and the time immediately before the increase in pressure (p) is determined as the time (t₂) of the actual shot end.

5. Method according to one of claims 1 to 4, **characterised in that** data for the density of the reaction components as a function of the pressure and of the temperature of the reaction component (1, 2) are stored in the machine control (11), wherein the pressure of the reaction components between the time point of the shot start (t₁) and the time point of the shot end (t₂), in particular the average pressure during the said times, and the temperature of the reaction components (1, 2) being measured and the actual density of the reaction components (1, 2) being determined therefrom.

6. Method according to claim 5, **characterised in that** the conveyed mass of the reaction components (1, 2) is determined from the volumes of the reaction components (1, 2) determined in step c) of claim 1 and the determined actual densities of the reaction components (1, 2).

7. Method according to one of claims 1 to 6, **characterised in that** the following procedure is used to determine the conveyed volume according to step c) of claim 1:
A) Calibration of the volume flow meter (14, 15) and define an error screen (Mas) by:
A1): Determining of the conveyed volume for each co-operating pair of teeth of the rotatably mounted bodies (19, 20);
A2): Forming the average value of the conveyed volume over all pairs of teeth;
A3): Determining of the deviation of the conveyed volume of each pair of teeth from the average value and storing the determined deviations (Mas);
B) In determining the volume conveyed during the time point of the actual shot start (t₁) and the time point of the actual shot end (t₂) according to step c) of claim 1:
B1): Determination of the conveyed volume for all partial volumes of the tooth pairs used during the start and end of the shot, taking into account the deviations from the average value using the error screen (Mas);
B2): Summation of all partial volumes to obtain the total volume delivered between the start and end of the shot.

8. Method according to claim 7, **characterised in that** two sensors (21, 22) are used for the determination according to step A1) of claim 7, which sensors detect the position of the tooth flanks or tooth heads of the rotatably mounted bodies (19, 20) and convert each into a square-wave signal, wherein the square-wave signal being used to detect the position of successive teeth of the rotatably mounted bodies (19, 20).

9. Method according to claim 8, **characterised in that** the two sensors (21, 22) are arranged offset relative to one another in such a way that the position of the successive tooth flanks or tooth heads of the rotatably mounted bodies (19, 20) can be detected phase-shifted.

10. Method according to one of claims 7 to 9, **characterised in that** the calibration and setting of the error screen (Mas) according to step A) of claim 7 is repeated periodically.

## Revendications

1. Procédé de fabrication de composants en polyuréthane dans un procédé d'injection, dans lequel au moins deux composants de réaction (1, 2) sont transportés dans une tête de mélange (5) à rainures au moyen de pompes doseuses (3, 4), en particulier à des pressions de dosage d'au moins 50 bars,
dans lequel les composants de réaction (1, 2) sont d'abord transportés en circulation à travers une buse (6, 7) à composant respective, par l'intermédiaire d'une rainure de recirculation (8, 9), dans un tiroir de commande (10) en circulation en retour dans un récipient de stockage,
dans lequel le début d'injection est initié par un signal électrique émis par une commande de machine (11), suite à quoi une vanne hydraulique (12) est commutée, puis le tiroir de commande (10) passe à partir de la position de circulation dans la position d'injection, de telle sorte que les composants de réaction (1, 2) sont introduits dans la chambre de mélange (13), y sont mélangés entre eux et ensuite évacués,
dans lequel la fin de l'injection est ensuite initiée par élimination du signal électrique émis par la commande de la machine (11), suite à quoi la vanne hydraulique (12) est à nouveau commutée, puis le tiroir de commande (10) est déplacé à partir de la position d'injection en retour dans la position de circulation, de telle sorte que les composants de réaction (1, 2) sont à nouveau transportés par l'intermédiaire de la rainure de recirculation (8, 9) dans le tiroir de commande (10) en circulation en retour dans le récipient,
dans lequel les flux de fluides sont interrompus prélèvement par la tête de mélange (5), les pompes doseuses (3, 4) étant en cours de fonctionnement, lors du déplacement du tiroir de commande (10) à partir de la position de circulation dans la position d'injection et vice versa,
dans lequel les débits volumiques transportés entre la pompe doseuse (3, 4) et la tête de mélange sont à chaque fois transportés à travers un débitmètre volumétrique (14, 15), composé au moins d'un boîtier (16) présentant une ouverture d'entrée (17) et une ouverture de sortie (18) et au moins de deux corps (19, 20) logés rotatifs, en particulier des engrenages, coopérant dans ce boîtier, ces corps (19, 20) logés rotatifs étant mis en rotation en réponse à un débit volumique (Q) transporté à travers le débitmètre volumétrique,
**caractérisé en ce que**
le procédé présente les étapes suivantes :
a) détermination du début effectif de l'injection par évaluation, après la génération du signal électrique au début de l'injection, de l'évolution de la pression (p) respective du composant de réaction (1, 2) et par détermination de l'instant où le composant de réaction (1, 2) pénètre dans la chambre de mélange (13) de la tête de mélange (5) et enregistrement de l'instant (t₁) du début effectif de l'injection,
b) détermination de la fin effective de l'injection par évaluation, après la génération du signal électrique à la fin de l'injection, de l'évolution de la pression (p) respective du composant de réaction (1, 2) et par détermination de l'instant où le composant de réaction (1, 2) ne pénètre plus dans la chambre de mélange (13) de la tête de mélange (10) et enregistrement de l'instant (t₂) du début effectif de l'injection,
c) détermination du volume transporté des composants de réaction (1, 2), au moyen des débitmètres volumétriques (14, 15) des composants de réaction (1, 2) respectifs, qui a été transporté par les pompes doseuses (3, 4) dans la période entre l'instant du début effectif de l'injection (t₁) et l'instant de la fin effective de l'injection (t₂) et émission des volumes respectivement déterminés.

2. Procédé selon la revendication 1, **caractérisé en ce que**, lors de l'exécution des étapes a) et b) de la revendication 1, l'évolution temporelle de la pression (p) du composant de réaction (1, 2) respectif est analysée, la valeur maximale de la pression et/ou une valeur limite prédéfinie pour le changement de pression en fonction du temps étant prises en compte.

3. Procédé selon la revendication 2, **caractérisé en ce que**, lors de l'exécution de l'étape a) de la revendication 1, le maximum (Max) d'une pointe de pression qui survient est déterminé afin de définir le début de l'injection et l'instant de la survenue de la pointe de pression est défini comme l'instant (t₁) du début effectif de l'injection.

4. Procédé selon la revendication 2, **caractérisé en ce que**, lors de l'exécution de l'étape b) de la revendication 1, l'augmentation de l'évolution de la pression est déterminée afin de définir la fin de l'injection et l'instant immédiatement avant l'augmentation de la pression (p) est défini comme l'instant (t₂) de la fin effective de l'injection.

5. Procédé selon l'une des revendications 1 à 4, **caractérisé en ce que** des données relatives à la masse volumique des composants de réaction en fonction de la pression et de la température du composant de réaction (1, 2) sont enregistrées dans la commande de machine (11), la pression des composants de réaction entre l'instant du début de l'injection (t₁) et l'instant de la fin de l'injection (t₂), en particulier la pression moyenne pendant les instants mentionnés, ainsi que la température des composants de la réaction (1, 2) étant mesurées et la masse volumique réelle des composants de réaction (1, 2) étant déterminée.

6. Procédé selon la revendication 5, **caractérisé en ce que** la masse transportée des composants de réaction (1, 2) est déterminée à partir des volumes des composants de réaction (1, 2) déterminés à l'étape c) de la revendication 1 et des masses volumiques réelles des composants de réaction (1, 2).

7. Procédé selon l'une des revendications 1 à 6, **caractérisé en ce que**, pour la détermination du volume transporté selon l'étape c) de la revendication 1, il est procédé comme suit:
A) étalonnage du débitmètre volumétrique (14, 15) et définition d'un masque d'erreur (Mas) par :
A1) : détermination du volume transporté pour chaque paire de dents coopérant des corps (19, 20) logés rotatif ;
A2) : formation de la valeur moyenne du volume transporté sur toutes les paires de dents ;
A3) : détermination de l'écart entre le volume transporté de chaque paire de dents et la valeur moyenne et enregistrement des écarts détectés (Mas) ;
B) lors de la détermination du volume transporté pendant l'instant du début effectif de l'injection (t₁) et l'instant de la fin effective de l'injection (t₂) selon l'étape c) de la revendication 1 :
B1): détermination du volume transporté pour tous les volumes partiels des paires de dents utilisés pendant le début et la fin de l'injection, compte tenu des écarts par rapport à la valeur moyenne à l'aide du masque d'erreur (Mas) ;
B2) : calcul de la somme de tous les volumes partiels afin d'obtenir le volume transporté au total entre le début et la fin de l'injection.

8. Procédé selon la revendication 7, **caractérisé en ce que**, pour la détermination selon l'étape A1) de la revendication 7, deux capteurs (21, 22) sont utilisés qui détectent la position des flancs de dents ou des têtes de dents des corps (19, 20) logés rotatif et la convertissent en un signal rectangulaire, le signal rectangulaire étant utilisé pour détecter la position de dents successives des corps (19, 20) logés rotatif.

9. Procédé selon la revendication 8, **caractérisé en ce que** les deux capteurs (21, 22) sont agencés de manière décalée l'un par rapport à l'autre, de manière à pouvoir détecter, en décalage de phase, la position des flancs de dents ou des têtes de dents successifs des corps (19, 20) logés rotatif.

10. Procédé selon l'une des revendications 7 à 9, **caractérisé en ce que** l'étalonnage et la définition du masque d'erreur (Mas) selon l'étape A) de la revendication 7 sont périodiquement répétées.
